# DEMANDE DE BREVET EUROPEEN

(11) **EP 1 416 202 A1**
(43) Date de publication de la demande: **06.05.2004**
(21) Numéro de dépôt: 03292693.3
(22) Date de dépôt: 28.10.2003
(51) Int. Cl.: F16J 15/46, E21D 9/08

(54) **Agencement de joint d'étanchéité pour deux pièces articulées**

(30) Priorité: 30.10.2002 FR 0213636
(71) Demandeur: Bresso, Claude Louis Jean, F-95160 Montmorency (FR)
(72) Inventeur: Bresso, Claude Louis Jean, F-95160 Montmorency (FR)
(74) Mandataire: Thinat, Michel

(57) **Abrégé**

L'invention concerne un agencement de joint d'étanchéité pour deux pièces articulées dans différents vecteurs de direction, tels que deux segments tubulaires susceptibles d'effectuer un mouvement relatif angulaire.

Cet agencement est caractérisé en ce que l'une des pièces articulées comprend un premier élément cylindrique (9) qui s'engage à l'intérieur d'un second élément cylindrique (8) appartenant à l'autre pièce et en ce qu'au moins un anneau d'étanchéité (13) en un matériau souple et élastiquement déformable est disposé dans une rainure annulaire (11) pratiquée dans l'une (16) des deux faces cylindriques en regard desdits deux éléments (8, 9), d'une profondeur assurant que la partie radialement externe de l'anneau (13) fasse saillie radialement hors de la rainure (11) afin que l'anneau (13) soit appliqué de façon étanche au premier élément (9), à l'intérieur de la rainure (11), et à la face interne (17) du deuxième élément (8), par sa face périphérique extérieure dégagée.

L'invention est utilisable pour des modules d'un tunnelier de creusage de galeries dans un sol.

## Description

L'invention concerne un agencement de joint d'étanchéité pour deux pièces articulées dans différents vecteurs de directions, tels que deux segments tubulaires susceptibles d'effectuer un mouvement relatif angulaire entre une position d'alignement axial et des positions dans lesquelles les axes des segments forment un certain angle l'un par rapport à l'autre, et un tunnelier équipé d'au moins un tel agencement de joint d'étanchéité.

Des agencements de joint d'étanchéité de ce type, qui sont déjà connus, sont encombrants et d'une structure complexe les rendant inutilisables pour certaines applications comme par exemple une suite de modules de tunneliers de creusage de galeries dans un sol.

L'invention a pour but de proposer un agencement du type défini plus haut, qui permet de pallier les inconvénients susmentionnés de l'état de la technique.

Pour atteindre ce but, l'agencement de joint d'étanchéité selon l'invention est caractérisé en ce que l'une des pièces articulées comprend un premier élément cylindrique qui s'engage à l'intérieur d'un second élément cylindrique appartenant à l'autre pièce et en ce qu'au moins un anneau en un matériau souple est disposé dans une rainure annulaire pratiquée dans une des deux faces cylindriques au regard desdits deux éléments, d'une profondeur assurant que la partie radialement externe de l'anneau fasse saillie radialement hors de la rainure afin que l'anneau soit appliqué de façon étanche au premier élément, à l'intérieur de la rainure, et au deuxième élément par sa face périphérique extérieure dégagée.

Selon une caractéristique de l'invention, l'agencement comprend une pluralité d'anneaux d'étanchéité écartés les uns des autres dans la direction axiale des éléments cylindriques dans la zone d'engagement mutuel de ceux-ci.

Selon une autre caractéristique de l'invention, chaque anneau comporte un espace interne rempli d'un fluide sous pression choisi de façon que celle-ci soit supérieure à la pression à l'extérieur du joint.

Selon encore une autre caractéristique de l'invention, un anneau souple d'étanchéité a un volume interne total constant et est rempli d'un liquide tel que de l'huile.

Selon encore une autre caractéristique de l'invention, une source de réserve à pression variable en fonction des pressions externes est utilisée pour l'alimentation de l'anneau en fluide sous pression pour établir une contre-pression assurant l'étanchéité précitée.

Tunnelier de creusage de galerie dans un sol, du type comprenant une pluralité de modules axialement alignés, caractérisé en ce qu'un agencement de joint d'étanchéité décrit ci-dessus est interposé entre deux modules axialement adjacents du tunnelier.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue schématique en coupe axiale d'un système de tunnelier de creusage de galeries, donnée à titre d'exemple d'une application d'un agencement de joint d'étanchéité selon l'invention, représenté en A ;
- la figure 2 est une vue en coupe axiale d'un agencement de joint d'étanchéité selon l'invention, tel qu'illustré en A sur la figure 1.
- la figure 3 illustre un détail de l'invention.

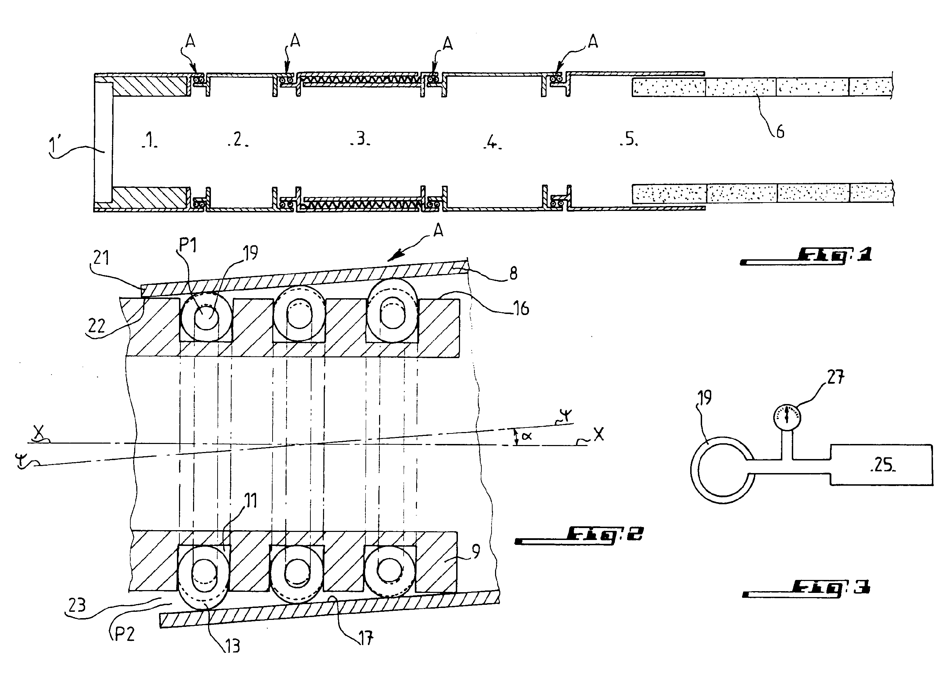

La figure 1 illustre, à titre d'exemple d'une application de l'invention, un système de tunnelier formé par un montage en série d'un certain nombre de modules. Ainsi la figure 1 montre en 1 un premier module avec son dispositif de roue de coupe 1', du type décrit dans le brevet français N° 2 706 527, en 2 un deuxième module de dégagement des déblais abattus par la roue de coupe du premier module, en 3 un module assurant un mouvement de va-et-vient, un quatrième module érecteur et un cinquième module de pose des voussoirs indiqué en 6, un agencement de joint d'étanchéité A, selon l'invention, étant interposé entre deux modules qui se suivent axialement.

Chaque paire de modules axialement alignés doit permettre un certain déplacement angulaire relatif entre une position d'alignement axial et une position dans laquelle l'axe d'un des modules est incliné selon un certain angle par rapport à l'axe de l'autre module. L'agencement de joint d'étanchéité A est conçu pour permettre cette articulation de deux modules adjacents dans différents vecteurs de direction, c'est-à-dire dans tous les plans perpendiculaires à l'axe du tunnelier.

La figure 2 illustre l'agencement de joint d'étanchéité A pour deux pièces creuses, ou pièces à protéger de pression venant d'extérieur, qui pourraient être formées par une paire de modules adjacents selon la figure 1. Chaque pièce comprend ou est constituée d'un élément tubulaire cylindrique respectivement 8 et 9, l'élément 9 étant engagé à l'intérieur de l'élément extérieur 8. Les deux éléments tubulaires 8 et 9 sont représentés sur la figure 2 dans une position d'inclinaison dans laquelle l'axe longitudinal X-X de l'élément 9 forme avec l'axe Y-Y de l'élément 9 un angle α.

L'élément tubulaire interne 9 comporte dans sa face cylindrique extérieure trois rainures annulaires 11 dont chacune est destinée à loger un anneau creux souple 13 en un matériau élastiquement déformable. La profondeur de chaque rainure annulaire 11 est choisie de façon que seulement une partie de l'anneau 11 soit reçue à l'intérieur de la rainure et que la portion radialement externe fasse saillie radialement hors de la rainure afin que, dans toutes les positions d'inclinaison des axes des deux éléments tubulaires 8 et 9, l'anneau soit appliqué, avec pression, à la fois contre l'élément 9, à l'intérieur de la rainure 11, et contre la face interne en regard 16 de l'élément tubulaire 8.

Chaque anneau d'étanchéité 13 est rempli d'un liquide, tel que de l'huile. La pression dans l'espace interne 19 de chaque anneau est choisi de façon que la pression interne P1 soit toujours supérieure à la pression P2 à l'extérieur du joint. Dans ces conditions, dans toutes positions de pivotement, les anneaux d'étanchéité restent en contact avec la face interne 17 de l'élément tubulaire extérieur 8, ce qui assure l'étanchéité entre les deux pièces articulées.

Comme le montre la figure 2, si, en raison de l'inclinaison de l'élément 8, par rapport à l'élément 9, l'extrémité 21 de l'élément 8 vient en appui en 22, c'est-à-dire en haut sur la figure 2, contre la face extérieure 16 de l'élément 9, et s'écarte à l'emplacement diamétralement opposé en 23 de la surface extérieure de l'élément 9, l'anneau est comprimé dans la partie supérieure de la figure, mais se dilate, sous l'impact de la pression P1 à l'intérieur de l'anneau, dans sa partie inférieure si bien qu'une application sous pression contre la face interne de l'élément 8 est assurée tout autour de l'anneau qui, d'autre part, est pressé contre les faces internes de la rainure 11 de l'élément tubulaire interne 9.

En se référent à nouveau à la figure 1, on comprend aisément que l'interposition d'un agencement de joint d'étanchéité A selon l'invention, entre deux modules adjacents assure une liaison articulée des deux modules tout en assurant leur étanchéité.

Il est à noter que de nombreuses modifications peuvent être apportées à l'agencement tel que décrit ci-dessus. Par exemple à la place d'un liquide dans le volume interne des anneaux d'étanchéité, tel que de l'huile, on pourrait également envisager d'alimenter ce volume par une source de réserve à pression variable en fonction des pressions externes pour établir une contre-pression, comme cela est montré sur la figure 3 représentant en 25 la pompe et la réserve du fluide et en 27 un manomètre permettant de mesurer et d'établir la pression du fluide à l'intérieur de l'anneau ou des anneaux d'étanchéité 19.

L'utilisation d'un anneau présentant au repos une section au moins partiellement circulaire permet d'offrir une surface d'appui du joint contre la face interne de l'élément cylindrique externe 8 relativement faible. Cette surface faible réduit les frottements lors d'un mouvement relatif des deux éléments tubulaires pour faciliter une prise d'angle entre ces éléments tout en assurant l'étanchéité.

L'anneau peut aussi avoir une section transversale ayant une forme complémentaire de la rainure à la base, et bombée ou en forme d'arc de cercle dans sa partie dépassant de la rainure.

D'autre part cet anneau qui est souple tout en ayant un volume interne sensiblement constant, est capable de tolérer un écart de coaxialité entre les éléments cylindriques tout en assurant l'étanchéité entre ces éléments. A ce titre, il est avantageusement réalisé en un matériau souple comme par exemple du caoutchouc de manière à pouvoir conserver un volume interne sensiblement constant tout en ayant une forme qui varie en fonction de la position relative qu'occupent les deux éléments cylindriques.

## Revendications

1. Agencement de joint d'étanchéité pour deux pièces articulées dans différents vecteurs de direction, tels que deux segments tubulaires susceptibles d'effectuer un mouvement relatif angulaire entre une position d'alignement axiale et des positions dans lesquelles les axes des deux segments forment un certain angle l'un par rapport à l'autre, l'une des pièces articulées comprenant un premier élément cylindrique (9) qui s'engage à l'intérieur d'un second élément cylindrique (8) appartenant à l'autre pièce, un anneau d'étanchéité (13) en un matériau souple et élastiquement déformable étant disposé dans une rainure annulaire (11) pratiquée dans l'une (16) des deux faces cylindriques en regard desdits deux éléments (8, 9), cette rainure étant d'une profondeur assurant que la partie radialement externe de l'anneau (13) fasse saillie radialement hors de la rainure (11) afin que l'anneau (13) soit appliqué de façon étanche au premier élément (9), à l'intérieur de la rainure (11), et à la face interne (17) du deuxième élément (8), par sa face périphérique extérieure dégagée **caractérisé en ce que** l'anneau a un volume interne sensiblement constant et est rempli d'un liquide tel que de l'huile.

2. Agencement selon la revendication 1, **caractérisé en ce qu'**il comprend une pluralité d'anneaux d'étanchéité (13), écartés les uns des autres dans la direction axiale des éléments cylindriques (8, 9) dans la zone d'engagement mutuelle de ceux-ci.

3. Agencement selon l'une des revendications 1 ou 2, **caractérisé en ce qu'**un anneau d'étanchéité (13) comporte un espace interne (19) rempli d'un fluide sous une pression (P1) choisie de façon qu'elle soit supérieur à la pression (P2) à l'extérieur du joint.

4. Agencement selon la revendication 3, **caractérisé en ce qu'**une source de réserve à pression variable en fonction des pressions externes (25) est utilisée pour l'alimentation de l'anneau en fluide sous pression pour établir une contre-pression assurant l'étanchéité précitée.

5. Tunnelier de creusage de galerie dans un sol, du type comprenant une pluralité de modules axialement alignés, **caractérisé en ce qu'**un agencement de joint d'étanchéité selon l'une des revendications 1 à 5 est interposé entre deux modules axialement adjacents du tunnelier.

6. Agencement selon l'une des revendications 1 à 4, dans lequel l'anneau présente une section au moins partiellement circulaire.

7. Agencement selon la revendication 6, dans lequel l'anneau présente une section ayant une base complémentaire de la rainure, et est bombée ou en forme d'arc de cercle dans la partie dépassant de la rainure.
